Europäisches Patentamt

European Patent Office

Office européen des brevets

(19)

(11) Publication number: 0 392 852

A2

## (12) EUROPEAN PATENT APPLICATION

(21) Application number: 90303990.7

(51) Int. Cl.5: G11B 7/135

(22) Date of filing: 12.04.90

(30) Priority: 13.04.89 JP 95650/89

(43) Date of publication of application:
17.10.90 Bulletin 90/42

(84) Designated Contracting States:
DE FR GB IT NL

(71) Applicant: SHARP KABUSHIKI KAISHA
22-22 Nagaike-cho Abeno-ku
Osaka 545(JP)

(72) Inventor: Ogata, Nobuo
Akatsuki-ryo, 2613-1, Ichinomoto-cho
Tenri-shi, Nara-ken(JP)
Inventor: Ueyama, Tetsuo
3-19-24, Tezukayama
Nara-shi, Nara-ken(JP)
Inventor: Sekimoto, Yoshihiro
1-24-1, Higashikidera-cho
Nara-shi, Nara-ken(JP)
Inventor: Sato, Hideaki 109-13, Wakatsuki-cho
Yamatokoriyama-shi
Nara-ken(JP)
Inventor: Nakata, Yasuo Akebono-ryo
2613-1, Ichinomoto-cho Tenri-shi
Nara-ken(JP)

(74) Representative: Huntingford, David Ian et al
W.P. THOMPSON & CO. Coopers Building
Church Street
Liverpool L1 3AB(GB)

(54) An optical head.

(57) An optical head having a beam splitting means
(3) disposed in the light path from a collimating lens
(2) to a beam-shaping means (4), whereby the light
beam from a semiconductor laser beam source (1)
retains its elliptical cross-section while it passes
through the beam splitting means (3), an its cross-
section is not made circular until it arrives at the
beam-shaping means (4), so that the size of the
beam splitting means (3), a converging lens (2) and
other optical members can be reduced, which makes
the optical head compact and lightweight.

Fig 1a

Fig. 1b

## AN OPTICAL HEAD

This invention relates to on optical head used in optical disc recording and reproducing devices that write and read information on discs by means of light.

Optical data processing devices (hereinafter referred to as optical disc devices) that write and read information by converging a flux of light (hereinafter referred to as a light beam) on a rotating disc surface have been put into practical use.

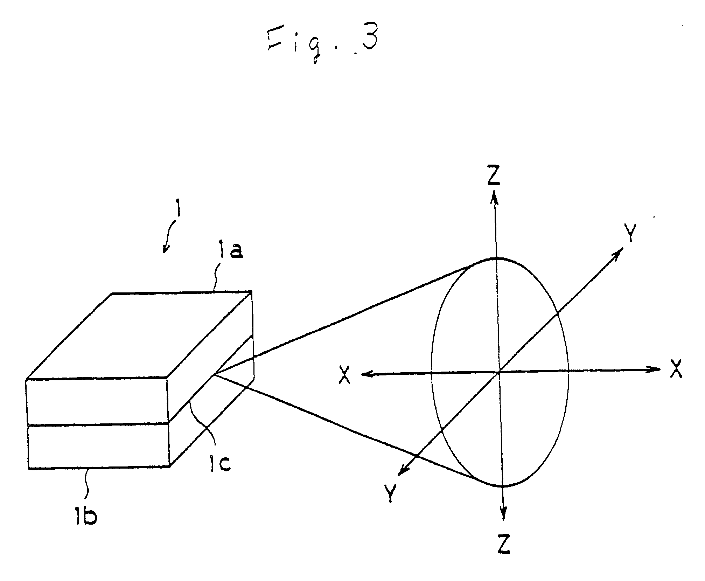

The optical head employed in optical disc devices generally uses a semiconductor laser beam source us the light source, but in the semiconductor laser beam sources in wide use today such as that shown in Figure 3, the size of the angle of divergence of the light in the direction of the Y axis in the X-Y plane parallel to the junction surface 1c of the laser chips 1a and 1b is different from that in the direction of the Z axis in the X-Z plane perpendicular to the said junction surface 1c. That is, in the 780-nm-wavelength GaAlAs semiconductor laser beam sources in common use today which emit an anisotropic light beam, the light beam diverges from the optical axis approximately 10 degrees in the Y axis direction and approximately 30 degrees in the Z axis direction, resulting in an elliptical cross section pattern in the Y-Z plane perpendicular to the optical axis with its short axis on the Y axis and its long axis on the Z axis.

Since converging and irradiating a light beam such as this with an elliptical cross section on the storage medium has disadvantages with respect to the light's utilization efficiency and convergence, it must be temporarily converted to a circular light beam, and to perform this conversion, a prism is used as a beam-shaping means as described below.

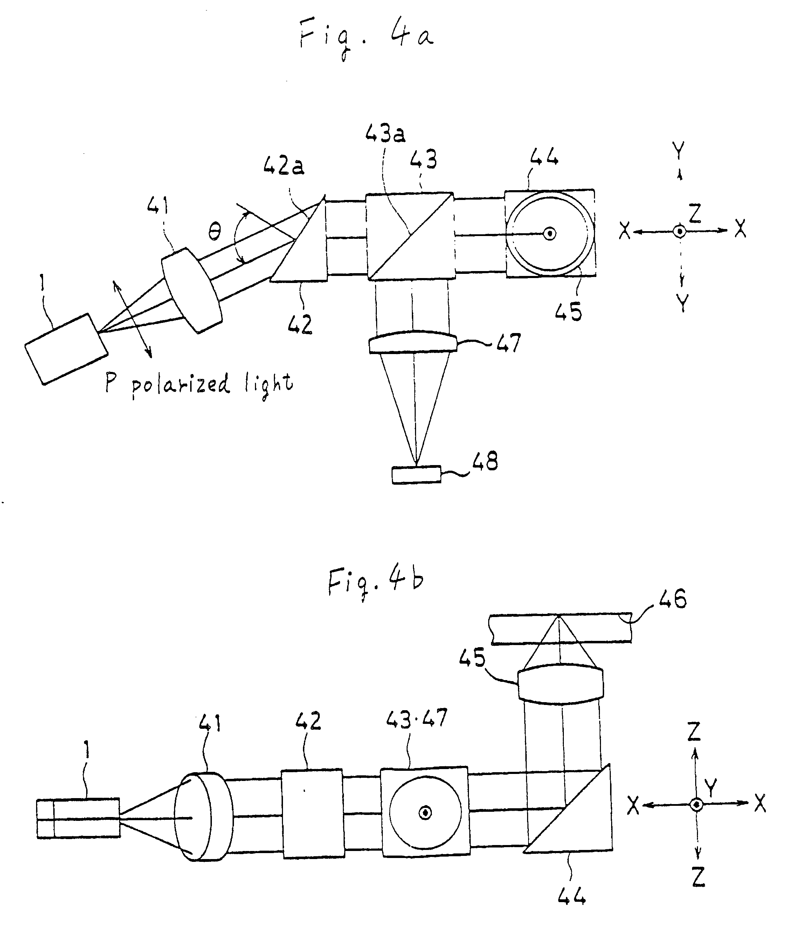

Figures 4a and 4b show the arrangement of the optical system of a conventional optical head.

An anisotropic light beam emitted from a semiconductor laser beam source 1 enters a collimating lens 41 as a P polarized divergent light beam with an elliptical cross section, the long axis of which is in the Z axis, and the collimating lens 41 focuses it into a parallel light beam with an elliptical cross section. This parallel light beam enters a beam-shaping prism 42, the optical axis of which is at an angle $\theta$ to the optical axis of the said parallel light beam so the cross section of the parallel light beam becomes circular on the plane of incidence 42a on the beam-shaping prism 42. It is then refracted by the prism 42 and passes the polarizing beam splitter 43 as a parallel beam with a circular cross section. It is bent 90 degrees by a mirror 44, proceeds in the direction of the Z axis and is converged onto the recording surface 46 of an optical disc (a recording medium) by an objective lens 45.

The light reflected from the recording surface 46 of the optical disc is modulated depending upon the recorded state, converted again to a parallel beam with a circular cross section by the objective lens 45, reflected by the mirror 44 and the split surface 43a of the polarizing beam splitter 43, travels in the direction of the Y axis, and is converged by a converging lens 47 on the optical detector 48 where the required information is converted to electric signals. The optical detector 48 is omitted from Figure 4b.

In the conventional optical head of Figures 4a and 4b, a prism 42 was used as the beam-shaping means which converts the cross section of the light beam from an elliptical shape to a circular shape, but a diffraction grating can also be used to perform the same function as the beam-shaping prism 42.

The most common method of access used is one in which the optical head housing all of the optical members from the above-mentioned semiconductor laser beam source 1 to the optical detector 48 is moved to the target address by rough control, and then fine control is used for precise accessing, but the inertia of the optical head in the above-mentioned rough control affects access time, so in order to attain fast access, a compact, lightweight optical head is required.

However, as described above, the light beam is shaped so that the short axis of the ellipse becomes equal to the long axis, so the cross section area of the light beam is increased. Moreover, the beam- shaping means is normally positioned after the collimating lens as shown in Figure 4, so all of the optical members after the beam-shaping means (i.e., from the`polarizing beam splitter to the converging lens) must have an effective diameter larger than the enlarged circular cross section of the light beam, thus resulting in greater weight and inhibiting the compactness and lightweight required for fast movement of the optical head.

The light beam emitted from the semiconductor laser beam source does not necessarily have to be directed to the recording surface by means of a mirror or other bending means, but since optical discs are generally rotated in a horizontal position, a mirror is used to bend the light beam as shown in Figures 4a and 4b prevents the unit from becoming too tall vertically for practical use and to make it thinner, but the added weight and the longer light path caused by the use of the mirror prevents the head from being made compact and lightweight.

It is an object of the present invention to provide an optical head which overcomes the above-discussed and other disadvantages and deficiencies of the known devices.

In accordance with the present invention, an optical head comprises a semiconductor laser beam source; a collimating lens that converts a divergent light beam emitted from said semiconductor laser beam source into a parallel light beam; a beam-shaping means that converts said parallel light beam with an elliptical cross section into a parallel light beam with a circular cross section; an objective lens that converges the light beam output from said beam-shaping means on the recording surface of a data recording medium and receives the light beam reflected from said recording surface of said data recording medium; and a beam splitting means that directs said reflected light beam into an optical detector, said beam splitting means being disposed in the light path from said collimating lens to said beam-shaping means.

In one embodiment, the beam-shaping means is a beam-shaping prism.

In one embodiment, the beam splitting means is a polarizing beam splitter.

In one embodiment, the optical head further comprises a light path bending means that is disposed in the light path from said semiconductor laser beam source to said data recording medium, said beam-shaping means functioning as said light path bending means.

In one embodiment, the beam splitting means is a polarizing beam splitter.

In one embodiment, the beam-shaping means is a diffraction grating.

Thus, in the present invention, the light beam from a semiconductor laser beam source retains its elliptical cross section while it passes through a beam splitting means, and its cross section is not made circular until it arrives at a beam-shaping means.

Furthermore, the light path of this shaped light beam is bent by a mirror and the light beam is converged on the recording surface of an optical disc by an objective lens. After the light beam is reflected by the recording surface, it passes through the objective lens and mirror and its cross section is converted again to an elliptical shape by the beam-shaping means. Therefore, the size of the beam splitting means and the converging lens which direct the light beam with an elliptical crops section to an optical detector can be smaller than that required by a light beam with a circular cross section so that the optical head can be made more compact and lighter weight than that of a conventional optical head.

Moreover, the diffraction grating which functions as a beam-shaping means is capable of bending the light path 90 degrees at the same time as when it shapes the light beam cross section from an elliptical shape to the circular shape. Therefore, a special optical member such as a mirror for bending the light path and the space which it requires is not required, so that the overall size and weight of the optical head can be reduced.

Thus, the invention described herein makes possible the provision of (1) a compact, lightweight optical head that has compact and lightweight beam splitting means, objective lens and converging lens; (2) a compact, lightweight optical head that attains precise, quick access to a desired position; and (3) a compact, lightweight optical head in which a beam-shaping means also functions as a light path banding means so that a special mirror for bending the light path is not required, which makes the optical head compact and lightweight.

The invention is decribed further hereinafter, by way of example only, with reference to the accompanying drawings, in which:-

Figures 1a and 1b, respectively, are plan and front views showing the optical system of an optical head of this invention;

Figures 2a and 2b, respectively, are plan and front views showing the optical system of another optical head of this invention;

Figure 3 is a perspective view showing a semiconductor laser beam source; and

Figures 4a and 4b, respectively, are plan and front views showing the optical system of a conventional optical head.

## Example 1

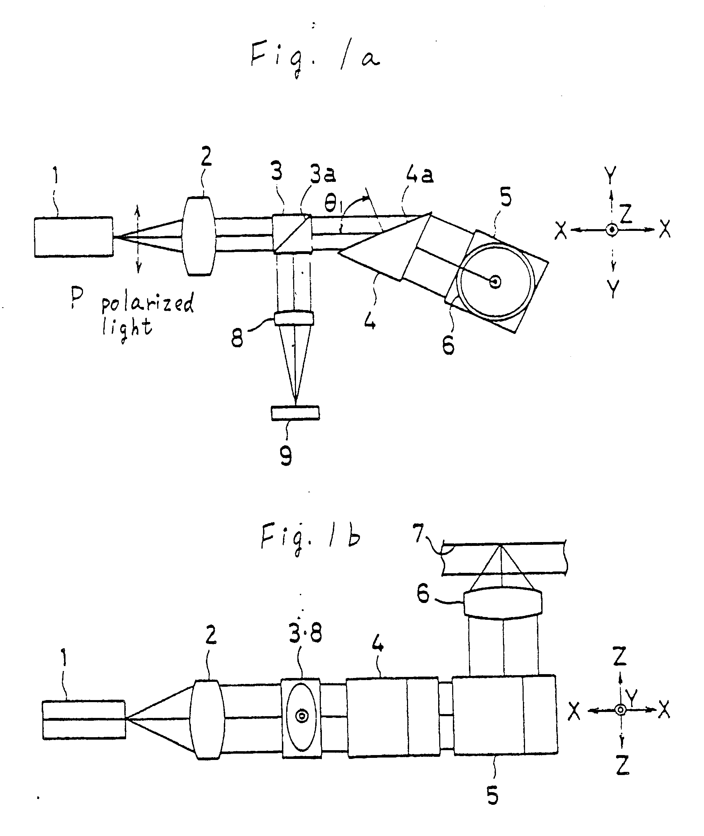

Figures 1a and 1b show the optical system of an optical head of this invention. Figure 1a is a top view from the direction of the Z axis perpendicular to the X-Y plane parallel to the junction surface 1c of the laser chips 1a and 1b of a semiconductor laser beam source 1 shown in Figure 3, and Figure 1b is a front view from the direction of the Y axis.

The optical axis of a flux of light (hereinafter, referred to as a light beam) emitted from a semiconductor laser beam source 1 is in the X-Y plane, and as shown in Figures 1a and 1b, a collimating lens 2, a beam splitting means 3 such as a polarizing beam splitter, and a beam-shaping means 4 such as a beam-shaping prism are arranged in that order on this optical axis. A mirror 5 is located on the optical axis of the light beam refracted by the above-mentioned beam-shaping prism 4. An objective lens 6 is located on the optical axis of the optical beam bent in the direction of the Z axis by the mirror 5. The recording surface 7 of an optical disc (recording medium) is adjacent to the objective lens 6 and rotates in a plane parallel to the X-Y plane.

A converging lens 8 and an optical detector 9 are located on the optical axis which branches in the Y direction in the X-Y plane from the splitter surface 3a of the polarizing splitter 3.

In the optical system with the above-mentioned structure, the anisotropic light beam emitted from the semiconductor laser beam source 1 enters the collimating lens 2 as a P polarized light wave. The light beam diverges approximately 10 degrees in the Y direction and approximately 30 degrees in the Z direction, so it is a divergent light beam with an elliptical cross section with its short axis in the Y direction and its long axis in the Z direction.

This divergent light beam is converted to a parallel beam with an elliptical cross section by the collimating lens 2 and enters the polarizing beam splitter 3, the plane of incidence of which is positioned parallel to the Y-Z plane and the splitter surface thereof parallel to the Z axis transmits this P polarized parallel light beam. The light beam travels straight and enters the beam-shaping prism 4. The beamshaping prism 4 is positioned so that its plane of incidence 4a is at angle $\theta_1$ to the optical axis of the light beam, thus causing the elliptical cross section of the light beam to become nearly circular at the plane of incidence 4a. Therefore, the light beam refracted at the plane of incidence 4a of the above-mentioned beam-shaping prism 4 enters into the mirror 5 as a parallel light beam with a circular cross section.

The plane of incidence of the mirror 5 is at a 45-degree angle to the optical axis and is positioned so the mirror 5 will bend the light beam which has entered thereinto with a circular cross section in the direction of the Z axis with its circular cross section, and the bent light beam enters into the objective lens 6. The objective lens 6 is positioned near the recording surface 7 of the optical disc rotating in a plane parallel to the X-Y plane, and it focuses the light beam with a circular cross section which has entered thereinto to a small light spot on the recording surface 7.

The small light spot reflected from the recording surface 7 of the optical disc is modulated depending upon the recorded state, and enters into the objective lens 6. The objective lens 6 converts the reflected light to a parallel beam with a circular cross section. The parallel beam is then reflected by the mirror 5, and when it passes through the beam-shaping prism 4, it is converted again to a light beam with an elliptical cross section. On its return trip, the light beam enters into the polarizing beam splitter 3 and is reflected by the splitter surface 3a, from which it travels in a direction parallel to the Y axis and is converged by the converging lens 8 so it is focused on an optical detector 9 where the optical signals are converted into electric signals. These electric signals are used not only to obtain the information recorded on the optical disc but also as focusing control signals to move the objective lens 6 in the Z axis direction so that the light beam is continually focused on the recording surface 7 of the optical disc. Lenticular lenses are widely used as the converging lens 8.

In Figure 1b, the optical detector 9 was omitted to avoid complicating the figure.

Since the polarizing beam splitter 3 which functions as the beam splitting means is positioned in the light path between the collimating lens 2 and beam-shaping prism 4 which functions as the beam-shaping means as described above, when the light beam passes through polarizing beam splitter 3 and converging lens 8, its cross section is elliptical, so that the dimensions of the polarizing beam splitter 3 and converging lens 8 in the direction of the short axis of the ellipse can be small, which makes it possible to reduce the weight proportionately and makes the optical head more compact and lighter weight overall.

Example 2

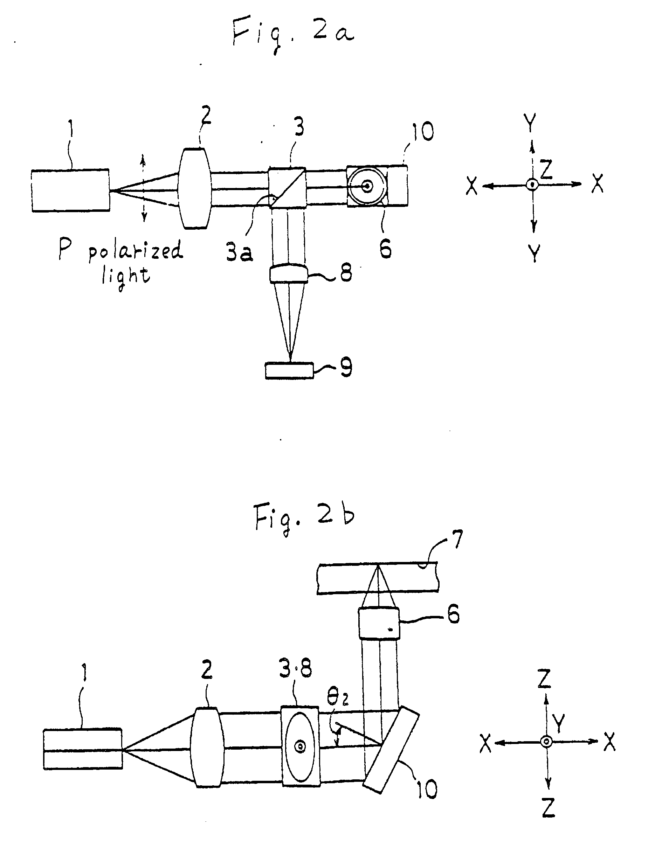

Figures 2a and 2b show the optical system of another optical head of this invention. The directions of the coordinate axes in Figures 2a and 2b are the same as in Figures 1a and 1b, respectively, where Figure 2a is a top view of the optical system of the optical head looking from the direction of the Z axis perpendicular to the X-Y plane and Figure 2b is a front view from the direction of the Y axis.

The semiconductor laser beam source 1, collimating lens 2, polarizing beam splitter 3, objective lens 6, converging lens 8 and optical detector 9 are the same as those of Figures 1a and 1b, except that a diffraction grating 10 is used as the beam-shaping means, and this diffraction grating 10 also functions as a light path bending means.

As shown in Figures 2a and 2b, the elliptical cross section of the anisotropic, P polarized light beam emitted from the semiconductor laser beam source 1, has a long axis that is in the direction of the Z axis and a short axis that is in the direction of Y axis. After this divergent beam is converted by the collimating lens 2 to a parallel beam with an elliptical cross section, it passes through the polarizing beam splitter 3 and enters into the diffraction grating 10 which functions as a beam-shaping means.

By selecting the proper grating interval, angle $\theta_2$ of incidence, reflection angle, etc., for the diffraction grating 10, the light path can be bent 90 degrees in the direction of the Z axis and the long axis in the elliptical cross section of the light beam is shortened to nearly equal the short axis. That is, the light beam whose optical axis is bent in the direction of the Z axis is shaped into a light beam with a circular cross section, the diameter of which is the short axis of the above-mentioned elliptical cross section.

The light beam which has been shaped and bent in this way is converged by the objective lens 6 so that it is focused into a small light spot on the recording surface 7 of the optical disc. This small light spot is reflected by the recording surface 7 and modulated depending upon the recorded state thereof, after which it enters into the objective lens 6 where it is converted to a parallel beam with a circular cross section. On its return, it is bent 90 degrees and its cross section made elliptical again by the diffraction grating 10, and thereafter, it enters the polarizing beam splitter 3 where it is reflected by the splitter surface 3a of the polarizing beam splitter 3 and made parallel to the Y axis, and it is converged by the converging lens 8 so that it focuses on the optical detector 9 where the optical signals are converted to electric signals.

As described above, the light beam with an elliptical cross section is processed by the polarizing beam splitter 3, converging lens 8 and diffraction grating 10, so the dimension of the short axis of the ellipse can be shorter than that of a conventional one. Moreover, since the objective lens 6 converges a light beam with a circular cross section whose diameter is the short axis of the above-mentioned ellipse, the diameter of the objective lens 6 can be made much smaller than that of a conventional one. That is, since all of the above-mentioned optical members can be made smaller and lighter, the space that they require can also be reduced. Furthermore, the diffraction grating 10 functions as both a beam-shaping means and a light path bending means, so mirrors or other special optical path bending means are not required so weight and space can be further reduced, ultimately resulting in an overall compact, lightweight optical head.

It is understood that various other modifications will be apparent to and can be readily made by those skilled in the art without departing from the scope of this invention as defined by the appended claims.

## Claims

1. An optical head comprising:
a semiconductor laser beam source (1);
a collimating lens (2) that converts a divergent light beam emitted from said semiconductor laser beam source (1) into a parallel light beam;
a beam-shaping means (4) that converts said parallel light beam with an elliptical cross-section into a parallel light beam with a circular cross section,
an objective lens (6) that converges the light beam output from said beam-shaping means (4) on the recording surface of a data recording medium (7) and receives the light beam reflected from said recording surface of said data recording medium;
and a beam splitting means (3) that directs said reflected light beam into an optical detector (9), characterised in that the beam splitting means (3) is disposed in the light path from said collimating lens (2) to said beam-shaping means (4).

2. An optical head according to claim 1, wherein said beam-shaping means (4) is a beam-shaping prism.

3. An optical head according to claim 1 or 2, wherein said beam splitting means (3) is a polarizing beam splitter.

4. An optical head according to claim 1, which further comprises a light path bending means (10) that is disposed in the light path from said semiconductor laser beam source (1) to said data recording medium (7), said beam-shaping means (4) functioning as said light path bending means.

5. An optical head according to claim 4, wherein said beam splitting means (3) is a polarizing beam splitter.

6. An optical head according to claim 4, wherein said beam-shaping means is a diffraction grating (10).

Fig. 1a

P polarized light

Fig. 1b

# Fig. 2a

P polarized light

# Fig. 2b

Fig. 3

Fig. 4a

P polarized light

Fig. 4b